# EUROPEAN PATENT SPECIFICATION

(11) **EP 3 800 417 B1**
(45) Date of publication and mention of the grant of the patent: **12.03.2025**
(21) Application number: 19213927.7
(22) Date of filing: 05.12.2019
(51) Int. Cl.: F28D 7/00, F28F 9/02, F28F 7/02

(54) **HEAT EXCHANGER WITH INTERLEAVED MANIFOLDS AND LAYERED CORE**
WÄRMETAUSCHER MIT VERSCHACHTELTEN VERTEILERN UND GESCHICHTETEM KERN
ÉCHANGEUR DE CHALEUR DOTÉ DE COLLECTEURS ENTRELACÉS ET D'UN NOYAU STRATIFIÉ

(30) Priority: 04.10.2019 US 201916593610
(43) Date of publication of application: 07.04.2021
(73) Proprietor: Hamilton Sundstrand Corporation, Charlotte, NC 28217-4578 (US)
(72) Inventor: BECENE, Ahmet T., West Simsbury, CT Connecticut 06092 (US); RUIZ, Gabriel, Granby, CT Connecticut 06035 (US); PALMER, Nigel G. M., West Granby, CT Connecticut 06090 (US); BLAMICK, Jessica M., Enfield, CT Connecticut 06082 (US)
(74) Representative: Dehns

(56) References cited:
- EP-A1- 3 173 724
- EP-A1- 3 604 998
- US-A1- 2017 089 643
- US-A1- 2018 266 770

## Description

### BACKGROUND

This disclosure relates generally to heat exchangers, and more specifically to an interface between a heat exchanger manifold and core.

Heat exchangers are well known in many industries for a variety of applications. Heat exchangers that operate in high temperature environments, such as in modem aircraft engines, can have reduced service lives due to high thermal stress. Thermal stress can be caused by uneven temperature distribution within the heat exchanger or with abutting components, component stiffness and geometry discontinuity, and/or other material properties of the heat exchanger. The interface between an inlet/outlet manifold and the core of a heat exchanger can be subject to the highest thermal stress and the shortest service life.

In mobile applications, particularly for aerospace applications, it is desirable to use heat exchangers that provide a compact, low-weight, and highly-effective means of exchanging heat from a hot fluid to a cold fluid. Additive manufacturing techniques can be utilized to manufacture heat exchangers layer by layer to obtain a variety of complex geometries that may be desirable for such applications.

### SUMMARY

A heat exchanger according to the invention is provided in claim 1.

### BRIEF DESCRIPTION OF THE DRAWINGS

FIG. 1A is a partial cut-away isometric view showing a front view of a heat exchanger with interleaved hot and cold flow layers.
FIG. 1B is partial cut-away isometric view showing a rear view of a heat exchanger with interleaved hot and cold flow layers.
FIG. 2 is a cross-sectional view of a honeycomb core of a heat exchanger taken at plane A-A.
FIG. 3 is an isometric view of a heat exchanger including inlet and outlet manifolds and hot and cold flow layers.

### DETAILED DESCRIPTION

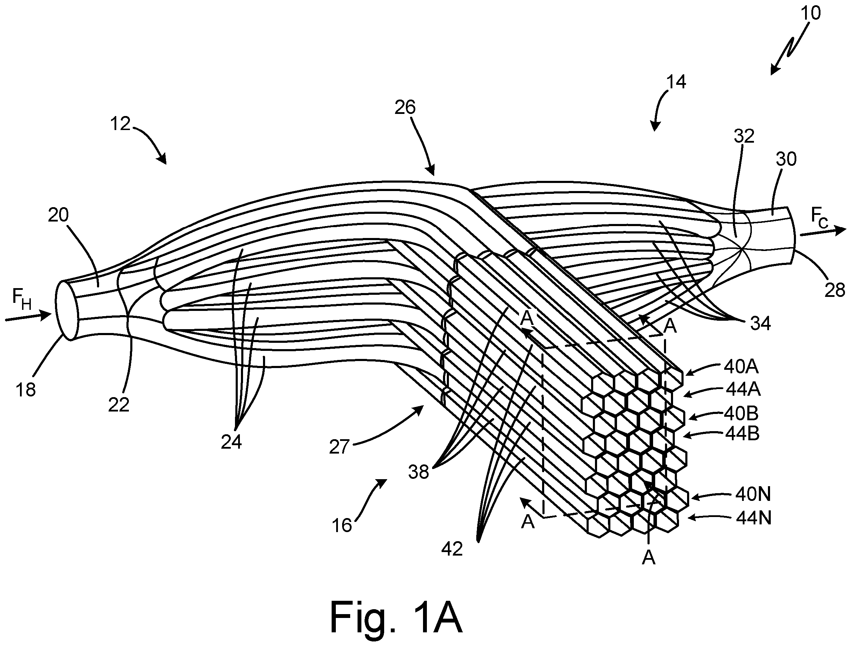

A heat exchanger with interleaved manifolds and a layered core is disclosed herein. The heat exchanger includes at least two branched tubular manifolds mated to a honeycomb core. The manifolds have a fractal geometry such that there is a fractal relationship between consecutive levels of branching tubes within each manifold. That is, each consecutive level of tubes within the manifolds can be nearly the same as the previous level. The interleaved structure of the manifolds and core enables the heat exchanger to be additively manufactured as a single unit. The heat exchanger is described below with reference to FIGS. 1A-3.

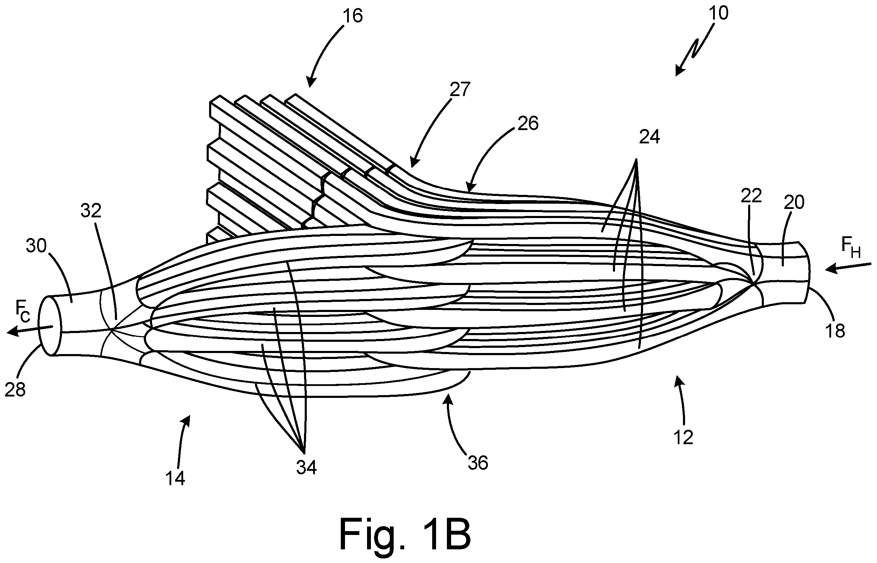

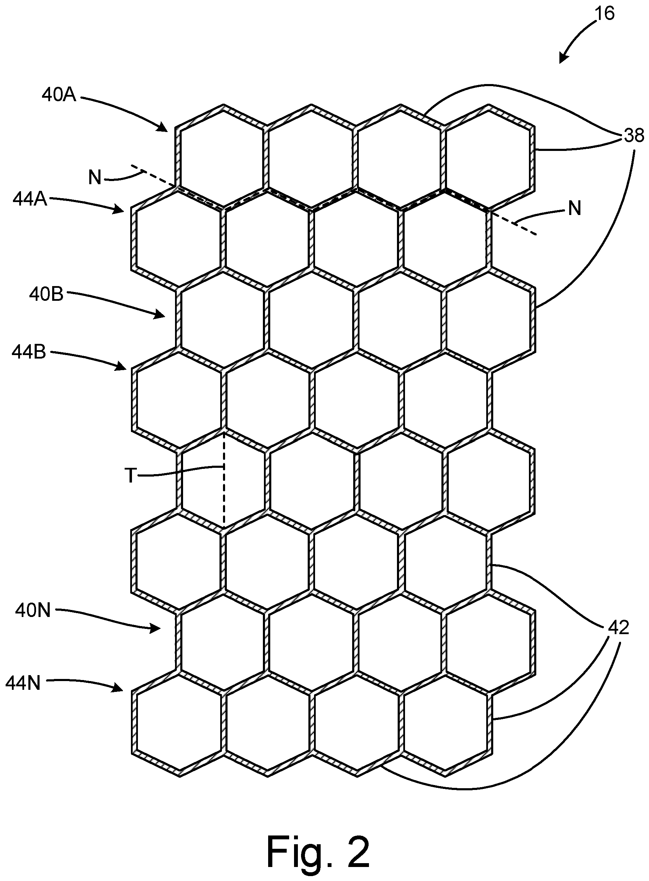

For purposes of clarity and ease of discussion, FIGS 1A, 1B, and 2 will be described together. FIG. 1A is a partial cut-away isometric view showing a front view of heat exchanger 10 with interleaved hot and cold flow layers. FIG. 1B is partial cut-away isometric view showing a rear view of heat exchanger 10. FIG. 2 is a cross-sectional view of heat exchanger 10. Heat exchanger 10 includes hot manifold 12 and cold manifold 14 fluidly connected to core 16. ("Hot" and "cold" designations herein are used to refer to the relative temperature of fluid flowing through the hot and cold manifolds, respectively, but the designations can be reversed in alternative embodiments).

Hot manifold 12 includes hot fluid port 18, hot primary fluid channel 20, hot branched region 22, hot secondary fluid channels 24, and hot overlap region 26. Transition region 27 forms an interface between hot manifold 12, cold manifold 14, and core 16. Cold manifold 14 similarly includes cold fluid port 28, cold primary fluid channel 30, cold branched region 32, cold secondary fluid channels 34, and cold overlap region 36. Core 16 includes hot core channels 38 within hot flow layers 40A-40N ("N" is used herein as an arbitrary integer) and cold core channels 42 within cold flow layers 44A-44N. Heat exchanger 10 interacts with hot fluid F_{H} at hot manifold 12 and with cold fluid F_{C} at cold manifold 14.

Hot fluid port 18 forms an opening into the fluid system of hot manifold 12. Specifically, hot fluid port 18 is configured as an opening into hot primary fluid channel 20. Hot primary fluid channel 20 forms a first section of hot manifold 12. Hot primary fluid channel 20 extends between hot fluid port 18 and hot branched region 22. Hot branched region 22 forms an end of hot primary fluid channel 20 distal to hot fluid port 18.

Hot secondary fluid channels 24 are fluidly connected to hot primary fluid channel 20 at hot branched region 22. Though the examples of FIGS. 1A and 1B show hot branched region 22 branching into four distinct layers of four hot secondary fluid channels 24, it should be understood that in other examples, alternate configurations are possible, including more or fewer hot secondary fluid channels 24 extending from hot branched region 22. Furthermore, hot secondary fluid channels 24 can extend radially from hot branched region 22 along a single plane or along multiple planes (to form a layered structure as shown in FIGS. 1A and 1B).

Hot secondary fluid channels 24 extend between hot branched region 22 of hot manifold 12 and core 16. Hot secondary fluid channels 24 can form a relatively straight path between hot branched region 22 and core 16 (i.e., so that hot manifold 12 and core 16 are oriented at 180 degrees) or the path can be curved, for example, as shown in FIGS. 1A and 1B at overlap region 26. Though the examples of FIGS. 1A and 1B show hot secondary fluid channels 24 turning 90 degrees to interface with core 16, it should be understood that in other examples, the angle between hot secondary fluid channels 24 and core 16 need not be 90 degrees.

As shown in FIGS. 1A and 1B, cold manifold 14 can have a substantially similar configuration to hot manifold 12. Cold fluid port 28 forms an opening into the fluid system of cold manifold 14. Specifically, cold fluid port 28 is configured as an opening into cold primary fluid channel 30. Cold primary fluid channel 30 forms a first section of cold manifold 14. Cold primary fluid channel 30 extends between cold fluid port 28 and cold branched region 32. Cold branched region 32 forms an end of cold primary fluid channel 30 distal to cold fluid port 28.

Cold secondary fluid channels 34 are fluidly connected to cold primary fluid channel 30 at cold branched region 32. Though the examples of FIGS. 1A and 1B show cold branched region 32 branching into four distinct layers of four cold secondary fluid channels 34, it should be understood that in other examples, alternate configurations are possible, including more or fewer cold secondary fluid channels 34 extending from cold branched region 32. Furthermore, cold secondary fluid channels 34 can extend radially from cold branched region 32 along a single plane or along multiple planes (to form a layered structure as shown in FIGS. 1A and 1B). As shown in the examples of FIGS. 1A and 1B, hot manifold 12 and cold manifold 14 can include the same number of layers of hot secondary fluid channels 24 and cold secondary fluid channels 34, respectively.

Cold secondary fluid channels 34 extend between cold branched region 32 of cold manifold 14 and core 16. Cold secondary fluid channels 34 can form a relatively straight path between cold branched region 32 and core 16 (i.e., so that cold manifold 14 and core 16 are oriented at 180 degrees) or the path can be curved, for example, as shown in FIGS. 1A and 1B at overlap region 36. Though the examples of FIGS. 1A and 1B show cold secondary fluid channels 34 turning 90 degrees to interface with core 16, such that cold manifold 14 is oriented at 180 degrees to hot manifold 12, it should be understood that in other examples, the angle between cold secondary fluid channels 34 and core 16 need not be 90 degrees (i.e., hot manifold 12 and cold manifold 14 need not be oriented at 180 degrees). Furthermore, hot manifold 12 and cold manifold 14 can also be oriented along different planes with respect to each other and/or with respect to core 16 (rather than a coplanar orientation as shown in FIGS. 1A and 1B).

As is most easily viewed in FIG. 1B, hot secondary fluid channels 24 and cold secondary fluid channels 34 are interleaved at hot overlap region 26 and cold overlap region 36. Hot overlap region 26 and cold overlap region 36 can correspond to the curved portion (as described above) of hot secondary fluid channels 24 and cold secondary fluid channels 34, respectively. Between hot branched region 22 and hot overlap region 26, layers of hot secondary fluid channels 24 are spaced apart such that a layer of cold secondary fluid channels 34 of cold manifold 14 can be disposed between two consecutive layers of hot secondary fluid channels 24. Consecutive layers of cold secondary fluid channels 34 are similarly spaced apart. Thus, at hot overlap region 26 and cold overlap region 36, layers of hot secondary fluid channels 24 and cold secondary fluid channels 34 form a stacked structure of alternating layers.

The stacked structure of alternating layers of hot secondary fluid channels 24 and cold secondary fluid channels 34 interfaces with core 16 at transition region 27. Transition region 27 forms an end of both hot secondary fluid channels 24 and cold secondary fluid channels 34 that is distal to hot branched region 22 and cold branched region 32. In alternative embodiments, hot manifold 12 and/or cold manifold 14 can be configured to include additional levels of branching and intervening fluid channels fluidly connected to hot secondary fluid channels 24 and/or cold secondary fluid channels 34 between hot branched region 22, cold branched region 32, and transition region 27. In some examples, hot manifold 12 and cold manifold 14 can have a fractal geometry defining the branching relationship between sequential levels of fluid channels.

Hot secondary fluid channels 24 and cold secondary fluid channels 34 are tubular in structure to facilitate fluid flow. At transition region 27, hot secondary fluid channels 24 and cold secondary fluid channels 34 transition from having a circular cross-sectional area to a hexagonal cross-sectional area. Further, each hot secondary fluid channel 24 is continuous with a corresponding hot core channel 38 with a hexagonal cross-section, and each cold secondary fluid channel 34 is continuous with a corresponding cold core channel 42 with a hexagonal cross-section. Thus, hot secondary fluid channels 24 and cold secondary fluid channels 34 and corresponding hot core channels 38 and cold core channels 42 form a continuous fluid network.

Hot core channels 38 form hot flow layers 40A-40N of core 16. Each hot flow layer 40A-40N can correspond to a separate layer of hot secondary fluid channels 24 of hot manifold 12. Similarly, cold core channels 42 form cold flow layers 44A-44N of core 16. Each cold flow layer 44A-44N can correspond to a separate layer of cold secondary fluid channels 34 of cold manifold 14. Thus, in the example of FIG. 1A, core 16 is shown to include four hot flow layers 40A-40N and four cold flow layers 44A-44N. Specifically, as is best viewed in FIG. 1B, a first layer of hot secondary fluid channels 24 can correspond to a first one of hot flow layers 40A-40N (e.g., hot flow layer 40A), and a first layer of cold secondary fluid channels 34 (with respect to the same arbitrarily chosen side of heat exchanger 10) can correspond to a first one of cold flow layers 44A-44N (e.g., cold flow layer 44A).

Hot flow layers 40A-40N are spaced apart such that a single cold flow layer 44A-44N is disposed between two consecutive hot flow layers 40A-40N. Consecutive cold flow layers 44A-44N are similarly spaced apart. Thus, throughout core 16, hot flow layers 40A-40N and cold flow layers 44A-44N form a stacked structure of alternating layers arranged along parallel planes corresponding to each of hot flow layers 40A-40N and cold flow layers 44A-44N. For example, as shown in FIGS. 1A, 1B, and 2, cold flow layer 44A is disposed between hot flow layer 40A and hot flow layer 40B. Though the example of FIG. 1A shows hot flow layers 40A-40N and cold flow layers 44A-44N are arranged such that all layers (e.g., each of hot flow layers 40A-40N and cold flow layers 44A-44N) are parallel and all individual hot core channels 38 and cold core channels 42 follow a straight path within core 16, it should be understood that alternative core configurations are possible, including three-dimensional curved regions or separations within individual hot flow layers 40A-40N and/or cold flow layers 44A-44N.

In the examples of FIGS. 1A, 1B, and 2, core 16 is shown with a three-dimensional honeycomb geometry, but it should be understood that alternative embodiments can include other core types and/or geometries, particularly other layered geometries. Additionally, though the examples of FIGS. 1A and 1B illustrate heat exchanger 10 as including a single hot manifold 12 and a single cold manifold 14 connected to core 16, it should be understood that in other examples, heat exchanger 10 can include more than two manifold structures interfacing with core 16. Multiple manifold structures can be arranged in a substantially similar manner to hot manifold 12 and cold manifold 14 and can form additional layers of an interface with core 16.

The configuration and interleaved honeycomb geometry of core 16 is shown in greater detail in FIG. 2. FIG. 2 is a cross-sectional view of heat exchanger 10 taken at plane A-A of FIG. 1A. Each of hot core channels 38 and cold core channels 42 can have a regular hexagonal cross-sectional area (i.e., all walls and all interior angles (not labelled in FIG. 2) of each hot core channel 38 and cold core channel 42 can be congruent) defined by height T between opposite corners. Additionally,

FIG. 2 shows core 16 with a uniform, interlocking, hexagonal cross-sectional geometry.

Adjacent hot core channels 38 are aligned such that a single wall forming a side of the cross-sectional hexagon is shared between adjacent hot core channels 38. Multiple adjacent hot core channels 38 are aligned in this way to form one of hot flow layers 40A-40N. Similarly, adjacent cold core channels 42 are aligned such that a single wall forming a side of the cross-sectional hexagon is shared between adjacent cold core channels 42. Multiple adjacent cold core channels 42 are aligned in this way to form one of cold flow layers 44A-44N.

Hot flow layers 40A-40N are arranged alternately with cold flow layers 44A-44N. As shown in FIG. 2, an adjacent pair of hot flow layers 40A-40N and cold flow layers 44A-44N can be offset by half the width of one channel (e.g., hot core channels 38, cold core channels 42), such that the cross-sectional hexagons of the adjacent pair of hot flow layers 40A-40N and cold flow layers 44A-44N are interlocking. Hot-cold interfaces N define shared walls between adjacent ones of hot flow layers 40A-40N and cold flow layers 44A-44N (e.g., between hot flow layer 40A and cold flow layer 44A in FIG. 2). When viewed in cross-section, hot-cold interface N can form a zigzag line with points corresponding to the interlocking corners of hot core channels 38 and cold core channels 42. Because adjacent hot flow layers 40A-40N and cold flow layers 44A-44N are interlocking along hot-cold interface N, the distance between adjacent hot flow layers 40A-40N and cold flow layers 44A-44N ranges from the length of one side of an individual channel (e.g., hot core channels 38, cold core channels 42) to height T.

With continued reference to FIGS. 1A, 1B, and 2, heat exchanger 10 is configured to permit the transfer of heat between hot fluid F_{H} and cold fluid Fc. For example, a transfer of heat can be associated with the use of hot fluid F_{H} and/or cold fluid F_{C} for cooling and/or lubrication of components in a larger system, such as a gas turbine engine or aerospace system. Hot fluid F_{H} and cold fluid F_{C} can be any type of fluid, including air, water, lubricant, fuel, or another fluid. Heat exchanger 10 is described herein as providing heat transfer from hot fluid F_{H} to cold fluid F_{C}; therefore, hot fluid F_{H} is at a greater temperature than cold fluid F_{C} at the point where hot fluid F_{H} enters heat exchanger 10. However, other configurations of heat exchanger 10 can include cold fluid F_{C} at a greater temperature than hot fluid F_{C} (and, thus, the "hot" and "cold" designations used herein would be reversed).

In the example of FIGS. 1A and 1B, heat exchanger 10 is shown receiving hot fluid F_{H} at hot fluid port 18 and discharging cold fluid F_{C} at cold fluid port 28 (i.e., a counter-flow arrangement). In other examples, the direction of flow of hot fluid F_{H} and/or cold fluid F_{C} can be reversed such that hot fluid F_{H} exits heat exchanger 10 at hot fluid port 18 and cold fluid F_{C} is received by heat exchanger 10 at cold fluid port 28. In yet other examples, heat exchanger 10 can be configured to interact with additional fluids, including along axes parallel or perpendicular to heat exchanger 10 (i.e., an additional counter-flow or a cross-flow arrangement, respectively, not shown in FIGS. 1A-2).

Hot fluid port 18 of hot manifold 12 is configured to receive or discharge hot fluid F_{H}. Hot fluid F_{H} entering hot manifold 12 at hot fluid port 18 is channeled through hot primary fluid channel 20 to hot branched region 22. At hot branched region 22, hot fluid F_{H} flows into hot secondary fluid channels 24. From hot branched region 22, hot fluid F_{H} flows within hot secondary fluid channels 24 through hot overlap region 26 to the interface with core 16 at transition region 27. In the examples of FIGS. 1A and 1B, hot fluid F_{H} flows directly from hot secondary fluid channels 24 into hot core channels 38 of hot flow layers 40A-40N.

Cold fluid port 28 of cold manifold 14 is configured to receive or discharge cold fluid F_{C}. Cold fluid F_{C} entering cold manifold 14 at cold fluid port 28 is channeled through cold primary fluid channel 30 to cold branched region 32. At cold branched region 32, cold fluid F_{C} flows into cold secondary fluid channels 34. From cold branched region 32, cold fluid F_{C} flows within cold secondary fluid channels 34 through cold overlap region 36 to the interface with core 16 at transition region 27. In the examples of FIGS. 1A and 1B, cold fluid F_{C} flows directly from cold secondary fluid channels 34 into cold core channels 42 of cold flow layers 44A-44N. Heat transfer between hot fluid F_{H} and cold fluid F_{C} can occur largely along hot-cold interfaces N of core 16.

In general, the interleaved structure of heat exchanger 10 retains the benefits of fractal geometry compared to traditional heat exchanger header configurations. Traditional heat exchanger headers, such as those with box-shaped manifolds, can have increased stress concentration at the interface between the manifold and the core, particularly at corners of the manifold where there is geometry discontinuity. The branching pattern of fractal heat exchanger manifolds, wherein each fluid channel is individually and directly connected to a passage in the core as shown in FIGS. 1A, 1B, and 2, can reduce this geometry discontinuity. Furthermore, each fluid channel in a fractal heat exchanger manifold (e.g., hot manifold 12 and cold manifold 14) behaves like a slim beam with low stiffness in transverse directions and reduced stiffness in horizontal directions due to the curved shape at each branched region. Thus, hot manifold 12 and cold manifold 14 have increased compliance (i.e., reduced stiffness) and experience less thermal stress compared to traditional heat exchanger header configurations.

Furthermore, the honeycomb geometry of core 16 with interleaved hot flow layers 40A-40N and cold flow layers 44A-44N has large hot-to-cold interaction surfaces (e.g., along hot-cold interfaces N) for a given volume. That is, there is ample surface area for heat transfer between hot fluid F_{H} and cold fluid F_{C} to occur. Thus, in applications wherein volume is a limiting factor, a heat exchanger with a honeycomb core as described herein can have increased efficiency relative to traditional heat exchanger configurations.

Heat exchanger 10 (and/or any component parts, including hot manifold 12, cold manifold 14, and core 16) can be formed partially or entirely by additive manufacturing. For metal components (e.g., nickel-based superalloys, aluminum, titanium, etc.) exemplary additive manufacturing processes include powder bed fusion techniques such as direct metal laser sintering (DMLS), laser net shape manufacturing (LNSM), electron beam manufacturing (EBM), to name a few, non-limiting examples. For polymer or plastic components, stereolithography (SLA) can be used. Additive manufacturing is particularly useful in obtaining unique geometries and for reducing the need for welds or other attachments (e.g., between a header and core). However, it should be understood that other suitable manufacturing processes can be used.

During an additive manufacturing process, heat exchanger 10 (and/or any component parts, including hot manifold 12, cold manifold 14, and core 16) can be formed layer by layer to achieve varied tubular dimensions (e.g., cross-sectional area, wall thicknesses, curvature, etc.). Each additively manufactured layer creates a new horizontal build plane to which a subsequent layer of heat exchanger 10 is fused. That is, the build plane for the additive manufacturing process remains horizontal but shifts vertically by defined increments (e.g., one micrometer, one hundredth of a millimeter, one tenth of a millimeter, a millimeter, or other distances) as manufacturing proceeds. The examples of FIGS. 1A and 1B show heat exchanger 10 already fully manufactured.

The interleaved geometry of heat exchanger 10 enables at least two fractal manifolds (e.g., hot manifold 12 and cold manifold 14) to be directly and individually connected to a honeycomb core (e.g., core 16). As such, heat exchanger 10 combines the benefits of both fractal and honeycomb geometries (as described above). The interleaved geometry also enables heat exchanger 10 to be additively manufactured as a single, monolithic unit. Additively manufacturing heat exchanger 10 as a single unit is particularly useful in that this process can reduce the need for welds, other attachments, or other manufacturing steps to combine components of heat exchanger 10 which would otherwise have been manufactured separately.

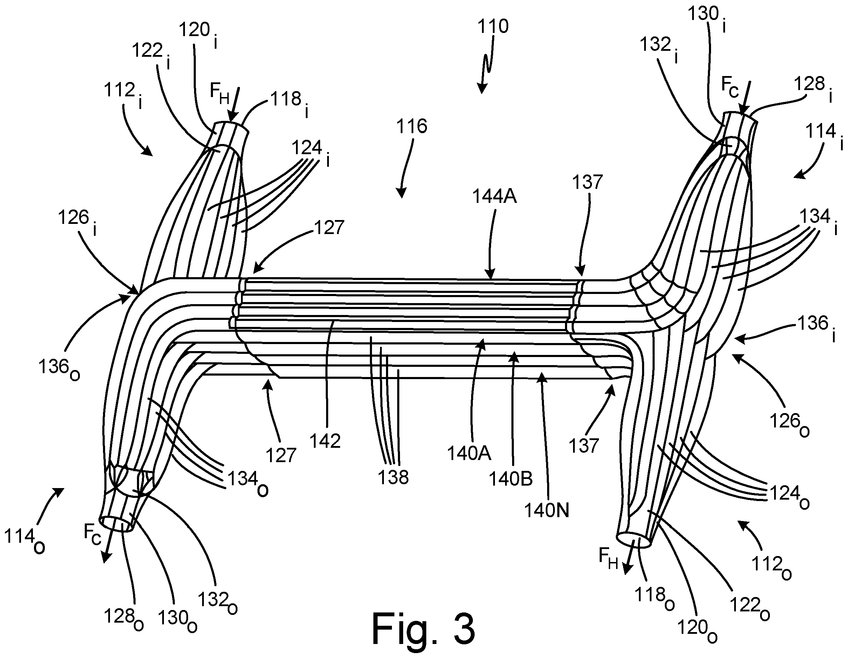

FIG. 3 is an isometric view of heat exchanger 110 including inlet and outlet manifolds and hot and cold flow layers. Heat exchanger 110 is substantially similar to heat exchanger 10, and additionally includes core 116 disposed between fluidly connected hot inlet manifold 112ᵢ and hot outlet manifold 112ₒ and between fluidly connected cold inlet manifold 114ᵢ and cold outlet manifold 114ₒ.

In serial fluid communication with each of hot fluid inlet 118ᵢ and hot fluid outlet 118ₒ (denoted in FIG. 3 with the applicable "i" or "o" subscript, but generally referred to herein solely by reference number) are hot primary fluid channel 120, hot branched region 122, hot secondary fluid channels 124, and hot overlap region 126. First transition region 127 forms an interface between hot inlet manifold 112ᵢ, cold outlet manifold 114ₒ, and core 116. In serial fluid communication with each of cold fluid inlet 128ᵢ and cold fluid outlet 128ₒ (similarly denoted in FIG. 3 with the applicable "i" or "o" subscript, but generally referred to herein solely by reference number) are cold primary fluid channel 130, cold branched region 132, cold secondary fluid channels 134, and cold overlap region 136. Second transition region 137 forms an interface between hot outlet manifold 112ₒ, cold inlet manifold 114ᵢ, and core 116.

Hot core channels 138 of core 116 extend within hot flow layers 140A-140N between fluidly connected, corresponding hot secondary fluid channels 124. Cold core channels 142 of core 116 extend within cold flow layers 144A-144N between fluidly connected, corresponding cold secondary fluid channels 134. Generally, the ratio within heat exchanger 110 between inlet hot secondary fluid channels 124ᵢ, hot core channels 138, and outlet hot secondary fluid channels 124ₒ can be 1:1:1, such that an individual inlet hot secondary fluid channel 124ᵢ is connected to an individual hot core channel 138, and the individual hot core channel 138 is connected to an individual outlet hot secondary fluid channel 124ₒ. The ratio between inlet cold secondary fluid channels 134ᵢ, cold core channels 142, and outlet cold secondary fluid channels 134ₒ can also be 1:1:1, such that an individual inlet cold secondary fluid channel 134ᵢ is connected to an individual cold core channel 142, and the individual cold core channel 142 is connected to an individual outlet cold secondary fluid channel 134ₒ.

Thus, each of hot inlet manifold 112ᵢ and hot outlet manifold 112ₒ can include interleaved layers of hot secondary fluid channels 124 directly and individually connected to interleaved hot flow layers 140A-140N of core 116, as described above with reference to FIGS. 1A, 1B, and 2. Similarly, each of cold inlet manifold 114ᵢ and cold outlet manifold 114ₒ can include interleaved layers of cold secondary fluid channels 134 directly and individually connected to interleaved cold flow layers 144A-144N of core 116, as described above with reference to FIGS. 1A, 1B, and 2.

In the example of FIG. 3, hot inlet manifold 112ᵢ is oriented at 180 degrees to cold outlet manifold 114ₒ on the same side of core 116. On the other side of core 116, hot outlet manifold 112ₒ is oriented at 180 degrees to cold inlet manifold 114ᵢ. Hot inlet manifold 112ᵢ can be coplanar with and antiparallel to hot outlet manifold 112ₒ, such that the entire path from hot inlet manifold 112ᵢ, through core 116, and out hot outlet manifold 112ₒ forms an "S" shape. Cold inlet manifold 114ᵢ can also be coplanar with and antiparallel to cold outlet manifold 114ₒ, such that the path from cold inlet manifold 114ᵢ, through core 116, and out cold outlet manifold 114ₒ forms a mirrored (i.e., "backwards") "S" shape.

In other words, hot outlet manifold 112ₒ is essentially transposed and mirrored across an axis through core 116 (not shown in FIG. 3) with respect to hot inlet manifold 112ᵢ. Similarly, cold outlet manifold 114ₒ is essentially transposed and mirrored across the same axis through core 116 with respect to cold inlet manifold 114ᵢ. However, because the relative configuration of the manifolds (e.g., hot inlet manifold 112ᵢ, hot outlet manifold 112ₒ, cold inlet manifold 114ᵢ, cold outlet manifold 114ₒ) is dependent, in part, on the three-dimensional geometry of core 116, it should be understood that in alternative embodiments, corresponding inlet and outlet manifolds can be oriented at different angles or even along different planes with respect to each other and/or with respect to core 116.

In a manner that is substantially similar to that described above with reference to FIGS. 1A, 1B, and 2, heat exchanger 110 is configured to permit the transfer of heat between hot fluid F_{H} and cold fluid F_{C}. In the example of FIG. 3, hot fluid F_{H} enters heat exchanger 110 at hot fluid inlet 118ᵢ. Hot fluid F_{H} passes through the branching tubular network (hot primary fluid channel 120ᵢ, hot branched region 122ᵢ, hot secondary fluid channels 124ᵢ, and hot overlap region 126ᵢ) of hot inlet manifold 112ᵢ, through core 116 within hot core channels 138, to the branching tubular network (hot overlap region 126ₒ, hot secondary fluid channels 124ₒ, hot branched region 122ₒ, and hot primary fluid channel 120ₒ) of hot outlet manifold 112ₒ, and exits heat exchanger 110 at hot fluid outlet 118ₒ. Heat exchanger 110 is configured such that hot fluid F_{H} encounters the same branching tubular network within hot outlet manifold 112ₒ as in hot inlet manifold 112ᵢ in reverse order.

Additionally, in the example of FIG. 3, cold fluid F_{C} enters heat exchanger 110 at cold fluid inlet 128ᵢ. Cold fluid F_{C} passes through the branching tubular network (cold primary fluid channel 130ᵢ, cold branched region 132ᵢ, cold secondary fluid channels 134ᵢ, and cold overlap region 136ᵢ) of cold inlet manifold 114ᵢ, through core 116 within cold core channels 142, to the branching tubular network (cold overlap region 136ₒ, cold secondary fluid channels 134ₒ, cold branched region 132ₒ, and cold primary fluid channel 130ₒ) of cold outlet manifold 114ₒ, and exits heat exchanger 110 at cold fluid outlet 128ₒ. Heat exchanger 110 is configured such that cold fluid F_{C} encounters the same branching tubular network within cold outlet manifold 114ₒ as in cold inlet manifold 114ᵢ in reverse order. Thus, heat exchanger 110 can have a counter-flow arrangement with hot fluid F_{H} and cold fluid F_{C} flowing through heat exchanger 110 in opposite directions.

In another example, the direction of flow of hot fluid F_{H} and/or cold fluid F_{C} can be reversed such that hot fluid F_{H} enters heat exchanger 110 at hot fluid outlet 118ₒ and exits at hot fluid inlet 118ᵢ and/or cold fluid F_{C} enters heat exchanger 110 at cold fluid outlet 128ₒ and exits at cold fluid inlet 128ᵢ, respectively. In yet other examples, heat exchanger 110 can be configured to interact with additional fluids, including along axes parallel or perpendicular to heat exchanger 110 (i.e., an additional counter-flow or a cross-flow arrangement, respectively, not shown in FIG. 3).

Thus, heat exchanger 110 is configured to facilitate the transfer of heat between hot fluid F_{H} and cold fluid F_{C} at core 116. Hot fluid F_{H}, exiting heat exchanger 110 at hot fluid outlet 118ₒ, and/or cold fluid F_{C}, exiting heat exchanger 110 at cold fluid outlet 128ₒ, can have final temperatures (e.g., after heat transfer has occurred and equilibrium is reached) that are suitable for cooling and/or lubrication of components in a larger system, such as a gas turbine engine or aerospace system.

Heat exchanger 110 presents the same benefits as described above in relation to heat exchanger 10, including multiple interleaved fractal manifolds (e.g., hot inlet manifold 112ᵢ and cold outlet manifold 114ₒ and/or cold inlet manifold 114ᵢ and hot outlet manifold 112ₒ) directly and individually connected to honeycomb core 116. The addition of inlet and outlet manifolds on either end of core 116 of heat exchanger 110 allows for an efficient counter-flow arrangement that also takes advantage of the combination of fractal and honeycomb geometries. Furthermore, heat exchanger 110 can be additively manufactured as a single, monolithic unit. Accordingly, the techniques of this disclosure allow for heat exchanger 110 to have increased efficiency and to be manufactured more effectively compared to traditional heat exchanger configurations.

## Claims

1. A heat exchanger comprising:
a core;
a first manifold (12) comprising:
a primary fluid channel (20) extending between a fluid port and a first branched region;
a plurality of secondary fluid channels (24) fluidly connected to the primary fluid channel at the first branched region; and
a first overlap region (26) of the plurality of secondary fluid channels downstream of the first branched region and connected to the core at a first transition region; and
a second manifold (14) comprising:
a primary fluid channel (30) extending between a fluid port and a first branched region;
a plurality of secondary fluid channels (34) fluidly connected to the primary fluid channel at the first branched region; and
a first overlap region (36) of the plurality of secondary fluid channels downstream of the first branched region and connected to the core at a first transition region;
wherein each of the first and second manifolds has a fractal geometry;
wherein each of the plurality of secondary fluid channels of the first and second manifolds is tubular between the first branched region and the first transition region;
wherein the plurality of secondary fluid channels (24, 34) of the first and second manifolds are interleaved at the first overlap region such that a first layer of secondary fluid channels of the first manifold forms a first flow layer within the core, a first layer of secondary fluid channels of the second manifold forms a second flow layer within the core, and the first flow layer is adjacent and parallel to the second flow layer;
wherein each of the plurality of secondary fluid channels of at least one of the first and second manifolds forms a curved path at the respective first overlap region;
wherein a cross-sectional area of each of the plurality of secondary fluid channels of the first and second manifolds changes at the first transition region such that the first transition region defines a perpendicular plane through the plurality of secondary fluid channels at which the cross-sectional area of each of the plurality of secondary fluid channels is hexagonal; and wherein the core is a three-dimensional honeycomb structure.

2. The heat exchanger of claim 1, further comprising:
a second layer of secondary fluid channels of the first manifold which forms a third flow layer within the core; and
a second layer of secondary fluid channels of the second manifold which forms a fourth flow layer within the core;
wherein the third flow layer is disposed between and is adjacent and parallel to the second flow layer and the fourth flow layer.

3. The heat exchanger of claim 2,
wherein the first, second, third, and fourth flow layers are each formed of an equal number of secondary fluid channels.

4. The heat exchanger of claim 2,
wherein the first manifold is configured to receive or discharge a first fluid, and wherein the second manifold is configured to receive or discharge a second fluid, and preferably wherein the first fluid and the second fluid flow through the heat exchanger in opposite directions, such that the heat exchanger has a counter-flow arrangement.

5. The heat exchanger of claim 4,
wherein adjacent flow layers within the core are configured to allow passage of one of the first fluid and the second fluid.

6. The heat exchanger of claim 1, wherein the core comprises:
a first plurality of flow layers extending between a first inlet manifold and a first outlet manifold; and
a second plurality of flow layers extending between a second inlet manifold and a second outlet manifold;
wherein the first plurality of flow layers includes the first flow layer and the second plurality of flow layers includes the second flow layer; and
wherein the first inlet manifold and the second outlet manifold are the first manifold and the second manifold, respectively, or wherein the first outlet manifold and the second inlet manifold are the first manifold and the second manifold, respectively.

7. The heat exchanger of claim 6,
wherein the second inlet manifold is disposed on an opposite side of the core from the first inlet manifold.

8. A method comprising:
constructing the heat exchanger of claim 1 utilizing an additive manufacturing process;
wherein the heat exchanger is configured to be additively manufactured as a single, monolithic unit.

## Patentansprüche

1. Wärmetauscher, umfassend:
einen Kern;
einen ersten Verteiler (12), der Folgendes umfasst:
einen primären Fluidkanal (20), der sich zwischen einer Fluidöffnung und einem ersten verzweigten Bereich erstreckt;
eine Vielzahl von sekundären Fluidkanälen (24), die an dem ersten verzweigten Bereich mit dem primären Fluidkanal fluidverbunden ist; und
einen ersten Überlappungsbereich (26) der Vielzahl von sekundären Fluidkanälen stromabwärts des ersten verzweigten Bereichs, der an einem ersten Übergangsbereich mit dem Kern verbunden ist; und
einen zweiten Verteiler (14), der Folgendes umfasst:
einen primären Fluidkanal (30), der sich zwischen einer Fluidöffnung und einem ersten verzweigten Bereich erstreckt;
eine Vielzahl von sekundären Fluidkanälen (34), die an dem ersten verzweigten Bereich mit dem primären Fluidkanal fluidverbunden ist; und
einen ersten Überlappungsbereich (36) der Vielzahl von sekundären Fluidkanälen stromabwärts des ersten verzweigten Bereichs, der an einem ersten Übergangsbereich mit dem Kern verbunden ist;
wobei jeder des ersten und des zweiten Verteilers eine fraktale Geometrie aufweist;
wobei jeder der Vielzahl von sekundären Fluidkanälen des ersten und des zweiten Verteilers zwischen dem ersten verzweigten Bereich und dem ersten Übergangsbereich rohrförmig ist;
wobei die Vielzahl von sekundären Fluidkanälen (24, 34) des ersten und des zweiten Verteilers in dem ersten Überlappungsbereich verschachtelt ist, derart, dass eine erste Schicht von sekundären Fluidkanälen des ersten Verteilers eine erste Strömungsschicht innerhalb des Kerns bildet, eine erste Schicht von sekundären Fluidkanälen des zweiten Verteilers eine zweite Strömungsschicht innerhalb des Kerns bildet und die erste Strömungsschicht benachbart und parallel zu der zweiten Strömungsschicht liegt;
wobei jeder der Vielzahl von sekundären Fluidkanälen von mindestens einem des ersten und des zweiten Verteilers einen gekrümmten Pfad an dem jeweiligen ersten Überlappungsbereich bildet;
wobei sich eine Querschnittsfläche jedes der Vielzahl von sekundären Fluidkanälen des ersten und des zweiten Verteilers an dem ersten Übergangsbereich ändert, derart, dass der erste Übergangsbereich eine senkrechte Ebene durch die Vielzahl von sekundären Fluidkanälen definiert, an der die Querschnittsfläche jedes der Vielzahl von sekundären Fluidkanälen sechseckig ist; und
wobei der Kern eine dreidimensionale Wabenstruktur ist.

2. Wärmetauscher nach Anspruch 1, ferner umfassend:
eine zweite Schicht sekundärer Fluidkanäle des ersten Verteilers, die eine dritte Strömungsschicht innerhalb des Kerns bildet; und
eine zweite Schicht sekundärer Fluidkanäle des zweiten Verteilers, die eine vierte Strömungsschicht innerhalb des Kerns bildet;
wobei die dritte Strömungsschicht zwischen der zweiten Strömungsschicht und der vierten Strömungsschicht angeordnet ist und benachbart und parallel zu diesen liegt.

3. Wärmetauscher nach Anspruch 2,
wobei die erste, die zweite, die dritte und die vierte Strömungsschicht jeweils aus einer gleichen Anzahl sekundärer Fluidkanäle gebildet sind.

4. Wärmetauscher nach Anspruch 2,
wobei der erste Verteiler dazu konfiguriert ist, ein erstes Fluid zu empfangen oder abzugeben, und wobei der zweite Verteiler dazu konfiguriert ist, ein zweites Fluid zu empfangen oder abzugeben, und wobei vorzugsweise das erste Fluid und das zweite Fluid in entgegengesetzten Richtungen durch den Wärmetauscher strömen, derart, dass der Wärmetauscher eine Gegenstromanordnung aufweist.

5. Wärmetauscher nach Anspruch 4,
wobei benachbarte Strömungsschichten innerhalb des Kerns dazu konfiguriert sind, den Durchgang eines des ersten Fluids und des zweiten Fluids zu ermöglichen.

6. Wärmeaustauscher nach Anspruch 1, wobei der Kern Folgendes umfasst:
eine erste Vielzahl von Strömungsschichten, die sich zwischen einem ersten Einlassverteiler und einem ersten Auslassverteiler erstreckt; und
eine zweite Vielzahl von Strömungsschichten, die sich zwischen einem zweiten Einlassverteiler und einem zweiten Auslassverteiler erstreckt;
wobei die erste Vielzahl von Strömungsschichten die erste Strömungsschicht beinhaltet und die zweite Vielzahl von Strömungsschichten die zweite Strömungsschicht beinhaltet; und
wobei der erste Einlassverteiler und der zweite Auslassverteiler der erste Verteiler bzw. der zweite Verteiler sind, oder wobei der erste Auslassverteiler und der zweite Einlassverteiler der erste Verteiler bzw. der zweite Verteiler sind.

7. Wärmetauscher nach Anspruch 6,
wobei der zweite Einlassverteiler auf einer dem ersten Einlassverteiler gegenüberliegenden Seite des Kerns angeordnet ist.

8. Verfahren, umfassend:
Aufbauen des Wärmetauschers nach Anspruch 1 unter Verwendung eines additiven Fertigungsprozesses;
wobei der Wärmetauscher dazu konfiguriert ist, als einzelne, monolithische Einheit additiv gefertigt zu werden.

## Revendications

1. Échangeur de chaleur, comprenant :
un noyau ;
un premier collecteur (12) comprenant :
un canal de fluide primaire (20) se prolongeant entre un orifice de fluide et une première région ramifiée ;
une pluralité de canaux de fluide secondaires (24) reliés fluidiquement au canal de fluide primaire au niveau de la première région ramifiée ; et
une première région de chevauchement (26) de la pluralité de canaux de fluide secondaires en aval de la première région ramifiée et reliée au noyau au niveau d'une première région de transition ; et
un second collecteur (14) comprenant :
un canal de fluide primaire (30) se prolongeant entre un orifice de fluide et une première région ramifiée ;
une pluralité de canaux de fluide secondaires (34) reliés fluidiquement au canal de fluide primaire au niveau de la première région ramifiée ; et
une première région de chevauchement (36) de la pluralité de canaux de fluide secondaires en aval de la première région ramifiée et reliée au noyau au niveau d'une première région de transition ;
dans lequel chacun des premier et second collecteurs présente une géométrie fractale ;
dans lequel chacun de la pluralité de canaux de fluide secondaires des premier et second collecteurs est tubulaire entre la première région ramifiée et la première région de transition ;
dans lequel la pluralité de canaux de fluide secondaires (24, 34) des premier et second collecteurs sont entrelacés au niveau de la première région de chevauchement de telle sorte qu'une première couche de canaux de fluide secondaires du premier collecteur forme une première couche d'écoulement à l'intérieur du noyau, une première couche de canaux de fluide secondaires du second collecteur forme une deuxième couche d'écoulement à l'intérieur du noyau, et la première couche d'écoulement est adjacente et parallèle à la deuxième couche d'écoulement ;
dans lequel chacun de la pluralité de canaux de fluide secondaires d'au moins l'un des premier et second collecteurs forme un trajet incurvé au niveau de la première région de chevauchement respective ;
dans lequel une aire de section transversale de chacun de la pluralité de canaux de fluide secondaires des premier et second collecteurs change au niveau de la première région de transition de telle sorte que la première région de transition définit un plan perpendiculaire à travers la pluralité de canaux de fluide secondaires au niveau duquel l'aire de section transversale de chacun de la pluralité de canaux de fluide secondaires est hexagonale ; et
dans lequel le noyau est une structure en nid d'abeille tridimensionnelle.

2. Échangeur de chaleur selon la revendication 1, comprenant également :
une deuxième couche de canaux de fluide secondaires du premier collecteur qui forme une troisième couche d'écoulement à l'intérieur du noyau ; et
une deuxième couche de canaux de fluide secondaires du second collecteur qui forme une quatrième couche d'écoulement à l'intérieur du noyau ;
dans lequel la troisième couche d'écoulement est disposée entre et est adjacente et parallèle à la deuxième couche d'écoulement et à la quatrième couche d'écoulement.

3. Échangeur de chaleur selon la revendication 2,
dans lequel les première, deuxième, troisième et quatrième couches d'écoulement sont chacune formées d'un nombre égal de canaux de fluide secondaires.

4. Échangeur de chaleur selon la revendication 2,
dans lequel le premier collecteur est configuré pour recevoir ou évacuer un premier fluide, et dans lequel le second collecteur est configuré pour recevoir ou évacuer un second fluide, et de préférence dans lequel le premier fluide et le second fluide s'écoulent à travers l'échangeur de chaleur dans des directions opposées, de telle sorte que l'échangeur de chaleur présente une disposition à contre-courant.

5. Échangeur de chaleur selon la revendication 4,
dans lequel les couches d'écoulement adjacentes à l'intérieur du noyau sont configurées pour permettre le passage de l'un du premier fluide et du second fluide.

6. Échangeur de chaleur selon la revendication 1, dans lequel le noyau comprend :
une première pluralité de couches d'écoulement se prolongeant entre un premier collecteur d'entrée et un premier collecteur de sortie ; et
une seconde pluralité de couches d'écoulement se prolongeant entre un second collecteur d'entrée et un second collecteur de sortie ;
dans lequel la première pluralité de couches d'écoulement comprennent la première couche d'écoulement et la seconde pluralité de couches d'écoulement comprennent la deuxième couche d'écoulement ; et
dans lequel le premier collecteur d'entrée et le second collecteur de sortie sont respectivement le premier collecteur et le second collecteur, ou dans lequel le premier collecteur de sortie et le second collecteur d'entrée sont respectivement le premier collecteur et le second collecteur.

7. Échangeur de chaleur selon la revendication 6,
dans lequel le second collecteur d'entrée est disposé sur un côté opposé du noyau par rapport au premier collecteur d'entrée.

8. Procédé comprenant :
la construction de l'échangeur de chaleur selon la revendication 1 en utilisant un procédé de fabrication additive ;
dans lequel l'échangeur de chaleur est configuré pour être fabriqué de manière additive en tant qu'unité monolithique unique.
